# FASCICULE DE BREVET EUROPEEN

(11) **EP 2 652 517 B1**
(45) Date de publication et mention de la délivrance du brevet: **08.10.2014**
(21) Numéro de dépôt: 11799794.0
(22) Date de dépôt: 29.11.2011
(51) Int. Cl.: G01S 7/52

(54) **PROCEDE ET DISPOSITIF D'IMAGERIE ULTRASONORE**
VERFAHREN UND VORRICHTUNG FÜR ULTRASCHALLBILDGEBUNG
METHOD AND DEVICE FOR ULTRASOUND IMAGING

(30) Priorité: 16.12.2010 FR 1060633
(43) Date de publication de la demande: 23.10.2013
(73) Titulaire: Centre National de la Recherche Scientifique (CNRS), 75794 Paris Cedex 16 (FR); INSERM - Institut National de la Santé et de la Recherche Médicale, 75013 Paris (FR); Université Paris Diderot - Paris 7, 75205 Paris Cedex 13 (FR)
(72) Inventeur: COUTURE, Olivier, F-75011 Paris (FR); TANTER, Mickael, F-92220 Bagneux (FR); FINK, Mathias, F-92190 Meudon (FR)
(74) Mandataire: Cabinet Plasseraud
(86) Numéro de dépôt international: PCT/FR2011/052810
(87) Numéro de publication internationale: WO 2012/080614

(56) Documents cités:
- US-A1- 2006 064 015
- COUTURE O ET AL: "Ultrafast Imaging of Ultrasound Contrast Agents", ULTRASOUND IN MEDICINE AND BIOLOGY, NEW YORK, NY, US, vol. 35, no. 11, 1 novembre 2009 (2009-11-01), pages 1908-1916, XP026718532, ISSN: 0301-5629, DOI: DOI:10.1016/J.ULTRASMEDBIO.2009.05.020 [extrait le 2009-08-20]
- KIRKHORN J ET AL: "THREE-STAGE APPROACH TO ULTRASOUND CONTRAST DETECTION", IEEE TRANSACTIONS ON ULTRASONICS, FERROELECTRICS AND FREQUENCY CONTROL, IEEE, US, vol. 48, no. 4, 1 juillet 2001 (2001-07-01), pages 1013-1022, XP009067011, ISSN: 0885-3010, DOI: DOI:10.1109/58.935718

## Description

La présente invention est relative aux procédés et dispositifs d'imagerie ultrasonore.

Plus particulièrement, l'invention concerne un procédé d'imagerie ultrasonore pour imager un champ d'observation dans un milieu à imager contenant des diffuseurs, ledit procédé comprenant plusieurs étapes successives de mesure au cours de chacune desquelles :
- on fait émettre par un réseau de transducteurs une onde ultrasonore incidente dans le champ d'observation, de longueur d'onde centrale λ,
- puis on enregistre des signaux bruts Sⱼ(i,t) captés par chaque transducteur et représentatifs d'une onde ultrasonore réfléchie réverbérée par les diffuseurs du milieu à partir de l'onde incidente, i étant un indice désignant chaque transducteur, j étant un indice désignant chaque étape de mesure et t désignant le temps,
le réseau de transducteurs s'étendant selon au moins une dimension et les ondes incidentes se propageant principalement selon une direction de propagation perpendiculaire au réseau de transducteurs.

Dans les procédés connus de ce type, les signaux bruts des différents transducteurs sont combinés entre eux pour chaque tir, par exemple par formation de voie, pour obtenir des images correspondant à chaque tir. La résolution de l'image est classiquement limitée à λ/2, où λ est la longueur d'onde des ultrasons (pour des ultrasons à 1.5 MHz, λ est de l'ordre de 1 mm dans les tissus humains mous).

La présente invention a notamment pour but d'obtenir une image ultrasonore ayant une résolution meilleure que λ/2.

A cet effet, selon l'invention, un procédé du genre en question est caractérisé en ce qu'on génère un nombre maximum C de cibles différentielles, différentes d'une étape de mesure à l'autre, chaque cible différentielle étant un diffuseur qui est présent dans le champ d'observation lors d'une étape de mesure et absent lors d'une étape de mesure immédiatement adjacente,
le nombre C étant au plus égal à INT (A/ (5λ) ² ) +1, où A est une aire du champ d'observation,
et en ce que ledit procédé comporte en outre les étapes suivantes :
- une étape de traitement différentiel au cours de laquelle on compare les signaux bruts Sⱼ(i,t) correspondant à des étapes de mesure successives d'indice j pour en extraire des signaux différentiels Vⱼ(i,t) représentatifs de variations entre signaux bruts des étapes de mesure successives,
- une étape d'ajustement au cours de laquelle on détermine au moins une fonction y = Pⱼ(x) correspondant à chaque signal différentiel Vⱼ(i,t), où x est une variable d'espace désignant une position perpendiculairement à la direction de propagation et y est une coordonnée désignant la position d'un point le long de la direction de propagation correspondant à un temps de trajet t (y = c.t/2 si t est le temps d'aller-retour entre l'émission de l'onde incidente et la détection de l'onde réfléchie),
- et une étape de localisation au cours de laquelle on détermine un sommet Aⱼ(x₀,y₀) de ladite fonction Pⱼ, correspondant à la position de la cible différentielle.

On notera que les cibles différentielles susmentionnées peuvent correspondre par exemple à des destructions successives de microbulles ou similaires sous l'effet d'ondes ultrasonores.

Grâce à ces dispositions, les diffuseurs constituant les cibles différentielles susmentionnées, sont activés individuellement et repérés individuellement à partir des signaux bruts captés et non à partir d'une image déjà constituée, de sorte qu'il est possible de les repérer de façon très précise dans l'espace avec une précision très inférieure à λ/2, pouvant aller par exemple jusqu'à λ/200. Les positions des diffuseurs ainsi repérées peuvent ensuite servir à bâtir une image du milieu, avec une résolution très inférieure à λ/2, par exemple de l'ordre de λ/50 à λ/200. L'invention proposée permet ainsi d'améliorer très significativement la résolution de l'imagerie ultrasonore.

Plus précisément, l'invention permet de n'activer qu'un nombre limité de diffuseurs à la fois afin de pouvoir distinguer le front d'onde individuel provenant d'une cible que l'on veut localiser. Le front d'onde n'étant plus une superposition de l'écho de plusieurs cibles, sa forme est précisément définie par la position d'un diffuseur distinct. Cette position peut être établie à quelques micromètres près. Afin de n'activer qu'un nombre limité de diffuseurs, l'invention peut exploiter divers effets de seuil générant ou supprimant des diffuseurs ponctuels d'ultrasons : en particulier, les agents de contraste ultrasonores (microbulles, micro-gouttelettes ou liposomes) sont affectés par les ultrasons qui peuvent induire leur explosion ou vaporisation. Cela génère une cible qui apparait et/ou disparait en un temps très bref, de l'ordre de la milliseconde ou de quelques millisecondes. Le front d'onde lié à ce diffuseur ponctuel peut être obtenu notamment en soustrayant les signaux rétrodiffusés lorsque la cible est présente, des signaux rétrodiffusés lorsque la cible est absente.

Dans divers modes de réalisation du procédé selon l'invention, on peut éventuellement avoir recours en outre à l'une et/ou à l'autre des dispositions suivantes :
- le nombre C est au plus égal à 2, de préférence égal à 1 ;
- au cours de l'étape d'ajustement, on détermine la fonction y = Pⱼ(x) en ajustant ladite fonction pour minimiser des écarts avec des points Dⱼ (xᵢ, yᵢ) , où xᵢ est une variable d'espace désignant une position de chaque transducteur i perpendiculairement à la direction de propagation et yᵢ est une coordonnée désignant la position d'un point le long de la direction de propagation correspondant à un temps de trajet tᵢ caractéristique du signal Vⱼ(i,t) (il peut par exemple s'agir du maximum du signal Vⱼ(i,t) ou du front d'onde du signal Vⱼ(i,t), ou autre) ;
- ladite fonction P est parabolique ;
- l'étape de traitement différentiel comporte une sous-étape de calcul de signaux différentiels bruts au cours de laquelle on détermine des signaux différentiels bruts Vbⱼ(i,t) = Sⱼ(i,t) - Sⱼ₋₁(i,t) ;
- l'étape de traitement différentiel comporte une sous-étape de calcul de signaux différentiels bruts au cours de laquelle on détermine des signaux différentiels bruts Vbⱼ(i,t) au moins par un filtrage passe-haut des signaux bruts Sⱼ(i,t) sur j ;
- l'étape de traitement différentiel comporte en outre une sous-étape de détermination d'enveloppe au cours de laquelle on détermine les signaux différentiels Vⱼ(i,t) en calculant une enveloppe temporelle de chaque signal différentiel brut Vbⱼ(i,t) ;
- au cours de l'étape de traitement différentiel, les signaux différentiels bruts subissent un filtrage temporel passe-bas sur t avant la sous-étape de détermination d'enveloppe ;
- la sous-étape de détermination d'enveloppe comporte un calcul d'une enveloppe temporelle Veⱼ(i,t) puis un filtrage passe-bas des enveloppes temporelles Veⱼ (i, t) sur i, pour obtenir les signaux différentiels Vⱼ(i,t) ;
- le champ d'observation comporte des microbulles constituant lesdits diffuseurs et on détecte les microbulles ayant disparu du champ d'observation d'une étape de mesure à l'autre, ces microbulles disparues constituant lesdites cibles différentielles ;
- l'onde incidente émise présente une amplitude adaptée pour détruire le nombre maximum C de microbulles à chaque étape de mesure ;
- l'onde incidente émise à chaque étape de mesure présente une amplitude adaptée pour ne pas détruire de microbulles et le procédé comporte en outre, en alternance avec les étapes de mesure, des étapes de destruction au cours desquelles on émet une onde ultrasonore destructive ayant une amplitude adaptée pour détruire le nombre maximum C de microbulles à chaque étape de destruction ;
- les positions Aⱼ (x₀, y₀) des cibles différentielles successives sont reportées sur une image du champ d'observation (obtenue par une méthode d'imagerie choisie parmi l'échographie, la radiologie, l'IRM, etc.) ;
- ladite image du champ d'observation est obtenue par échographie à partir dudit réseau de transducteurs.

Par ailleurs, l'invention a également pour objet un dispositif pour la mise en oeuvre d'un procédé tel que défini ci-dessus, ce dispositif comportant un réseau de transducteurs commandé par un dispositif de commande et traitement adapté pour imager un champ d'observation dans un milieu à imager contenant des diffuseurs, le dispositif de commande et traitement étant adapté pour, au cours de plusieurs étapes successives de mesure :
- faire émettre par le réseau de transducteurs une onde ultrasonore incidente dans le champ d'observation à chaque étape de mesure,
- puis enregistrer des signaux bruts Sⱼ(i,t) captés par chaque transducteur et représentatifs d'une onde ultrasonore réfléchie réverbérée par les diffuseurs du milieu à partir de l'onde incidente, i étant un indice désignant chaque capteur, j étant un indice désignant chaque étape de mesure et t désignant le temps,
le réseau de transducteurs s'étendant selon au plus deux dimensions et les ondes incidentes se propageant principalement selon une direction de propagation perpendiculaire au réseau de transducteurs,
caractérisé en ce que le dispositif de commande et traitement est adapté pour générer un nombre maximum C de cibles différentielles, différentes d'une étape de mesure à l'autre, chaque cible différentielle étant un diffuseur qui est présent dans le champ d'observation lors d'une étape de mesure et absent lors d'une étape de mesure immédiatement adjacente,
et en ce que le dispositif de commande et traitement est en outre adapté pour réaliser en outre les étapes suivantes :
- une étape de traitement différentiel au cours de laquelle on compare les signaux bruts Sⱼ(i,t) correspondant à des étapes de mesure successives d'indice j pour en extraire des signaux différentiels Vⱼ(i,t) représentatifs de variations entre signaux bruts des étapes de mesure successives,
- une étape d'ajustement au cours de laquelle on détermine au moins une fonction y = Pⱼ(x) correspondant à chaque signal différentiel Vⱼ (i,t), où x est une variable d'espace désignant une position perpendiculairement à la direction de propagation et y est une coordonnée désignant la position d'un point le long de la direction de propagation correspondant à un temps de trajet t,
- et une étape de localisation au cours de laquelle on détermine un sommet Aⱼ (x₀,y₀) de ladite fonction Pⱼ, correspondant à la position de la cible différentielle.

D'autres caractéristiques et avantages de l'invention apparaîtront au cours de la description suivante d'un de ses modes de réalisation, donné à titre d'exemple non limitatif, en regard des dessins joints.

Sur les dessins :
- la figure 1 est une vue schématique d'un dispositif d'imagerie ultrasonore selon un mode de réalisation de l'invention,
- la figure 2 est un schéma montrant un détail du milieu à imager,

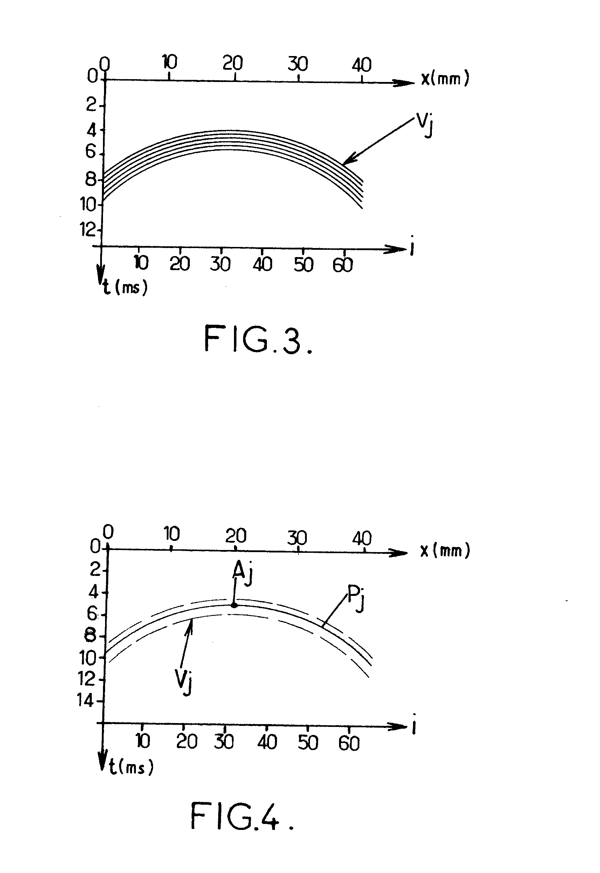

- la figure 3 est un graphe représentant des signaux différentiels Vⱼ obtenus par le procédé d'imagerie selon un mode de réalisation de l'invention,
- et la figure 4 est un graphe similaire à la figure 3, montrant une courbe parabolique Pⱼ ajustée sur les signaux différentiels Vⱼ et la position du sommet Aⱼ de cette courbe, correspondant à une cible différentielle qui est positionnée dans le milieu à imager avec une précision très inférieure à la longueur d'onde des ondes ultrasonores utilisées.

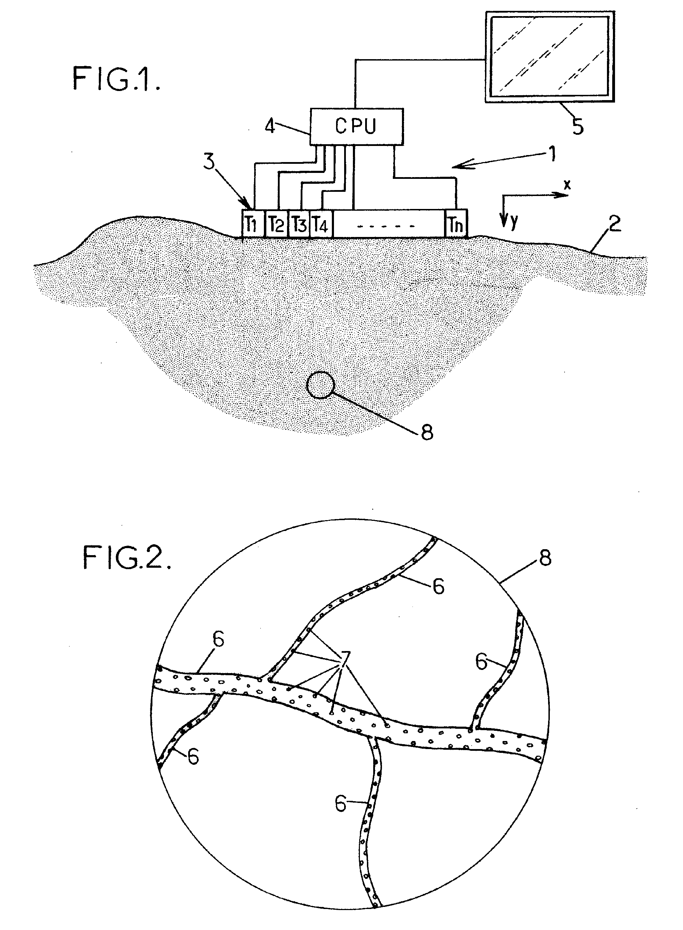

La figure 1 montre un exemple de dispositif 1 adapté pour imager un milieu 2 (par exemple une partie du corps d'un patient) par émission et réception d'ondes ultrasonores de compression, notamment dans un champ d'observation 8. Le milieu 2 est diffusant pour les ondes ultrasonores, c'est-à-dire qu'il est hétérogène et/ou contient des diffuseurs répartis de manière aléatoire et capables de réfléchir les ondes ultrasonores émises dans le milieu 2.

Le dispositif d'imagerie représenté sur la figure 1 comporte un réseau 3 de transducteurs Tᵢ-Tₙ, par exemple un réseau linéaire s'étendant selon un axe X (ou selon deux axes dans le cas où le réseau 3 serait à deux dimensions), ou le cas échéant un réseau à deux dimensions. Ce réseau 3 comporte un nombre n de transducteurs, n pouvant par exemple être compris entre 50 et 500, voire supérieur à 5000 pour un réseau à 2 dimensions. On peut par exemple utiliser une barrette linéaire de 60 à 100 transducteurs ayant chacun une largeur inférieure par exemple à 1 mm selon l'axe X.

Le réseau 3 de transducteurs est commandé par un dispositif de commande et traitement 4 (UC) par exemple une unité centrale informatique ou plusieurs unités centrales. Le dispositif de commande et traitement 4 est adapté pour commander individuellement les transducteurs du réseau 3 et pour enregistrer et traiter les signaux rétrodiffusés par le milieu 2 de façon à faire une image du milieu.

Dans l'exemple considéré, le dispositif d'imagerie 1 comporte en outre un écran 5 ou toute autre interface utilisateur permettant de visualiser une image du champ d'observation telle que celle représentée sur la figure 2, qui montre des vaisseaux capillaires 6 du corps humain 2, vaisseaux dans lesquelles circulent des microbulles 7 ou similaires, précédemment injectées dans le milieu 2 (par exemple dans le système sanguin) et constituant des diffuseurs capables de rétrodiffuser les ondes ultrasonores émises par le réseau 3 de transducteurs.

Ces microbulles peuvent par exemple être du type de celles décrites par Dayton et al. [Molecular ultrasound imaging using microbubble contrast agent - Frontiers in Bioscience 12, 5124-5142 - septembre 2007].

Le dispositif de commande et traitement 4 est adapté (programmé) pour mettre en oeuvre le procédé d'imagerie décrit ci-après, comportant :
(a) une pluralité d'étapes de mesure, au cours desquelles le dispositif de commande et traitement 4 enregistre des signaux bruts,
(a') ces étapes de mesures étant séparées éventuellement par des étapes de destruction de microbulles,
(b) au moins une étape de traitement différentiel des signaux bruts, pour obtenir des signaux différentiels représentatifs de cibles différentielles constituées en l'occurrence par des destructions de microbulles,
(c) au moins une étape d'ajustement au cours de laquelle on ajuste une courbe parabolique sur chaque signal différentiel,
(d) et au moins une étape de localisation au cours de laquelle on détermine un sommet de chaque courbe parabolique, correspondant à la position de la cible différentielle.

### (a) Etape de mesure :

Le procédé comporte plusieurs étapes successives de mesure, au nombre de N, par exemple environ 400 étapes de mesure répétées environ toutes les ms ou moins.

A cours de chacune des ces étapes de mesure, on fait émettre par le réseau 3 de transducteurs une onde ultrasonore incidente dans le champ d'observation 8, par exemple une onde plane ou éventuellement une onde focalisée, puis on enregistre des signaux bruts Sⱼ(i,t) captés par chaque transducteur T₁-Tₙ et représentatifs d'une onde ultrasonore réfléchie réverbérée par les diffuseurs du milieu à partir de l'onde incidente, i étant un indice désignant chaque transducteur, j étant un indice désignant chaque étape de mesure et t désignant le temps.

On notera que les signaux bruts ne sont pas des images échographiques, la réalisation d'une image échographique nécessitant un traitement des signaux bruts, par exemple par formation de voie.

Au moins l'une des étapes de mesure peut toutefois servir à établir une image échographique du champ d'observation 8 par le dispositif de commande et traitement 4, avec une résolution millimétrique classique, cette image étant ensuite superposée aux positions des cibles différentielles obtenues à l'étape (e) qui sera décrite ci-après. Eventuellement, des images échographiques peuvent être réalisées par le dispositif de commande et traitement 4 à plusieurs étapes de mesure ou à chaque étape de mesure, pour tenir compte d'éventuelles déformations du milieu 2 au cours du déroulement du procédé.

Selon l'invention, d'une étape de mesure à l'autre, on détruit un faible nombre C de microbulles. C est un nombre maximum de microbulles détruites dans le champ d'observation 8 d'une étape de mesure à l'autre. Chaque microbulle détruite sera ici appelée cible différentielle. Plus généralement, les cibles différentielles peuvent être des diffuseurs disparus ou apparus d'une étape de mesure à l'autre, c'est à dire des diffuseurs présents dans le champ d'observation lors d'une étape de mesure et absents lors d'une étape de mesure immédiatement adjacente.

Le nombre C est généralement au plus égal à 2, de préférence au plus égal à 1. Plus généralement, le nombre C peut être au plus égal à INT (A/(5λ)²)+1, où A est une aire du champ d'observation et INT désigne la fonction partie entière.

### Destruction de microbulles :

Pour obtenir cette destruction de microbulles, le dispositif de commande et traitement 4 fait émettre par le réseau 3 de transducteurs, des ondes ultrasonores (par exemple des ondes planes ou éventuellement des ondes focalisées) d'amplitude juste suffisante pour détruire le nombre maximum C susmentionné de microbulles. Cette amplitude peut être déterminée empiriquement lors d'une étape initiale de réglage (dans ce cas on détermine par échographie la quantité de microbulles détruites à chaque tir d'onde ultrasonore), ou bien elle peut être déterminée (empiriquement ou par le calcul) à l'avance en fonction des conditions opératoires.

Ces ondes ultrasonores servant à détruire une ou quelques microbulle(s) à chaque tir, peuvent être :
- soit les ondes incidentes émises à chaque étape de mesure, auquel cas le procédé ne comporte pas d'étape spécifique de destruction de microbulles,
- soit des ondes ultrasonores destructives d'amplitude supérieure aux ondes incidentes des étapes de mesure, lesdites ondes destructives étant émises chacune au cours d'une étape de destruction de microbulles (a'), intercalée entre deux étapes de mesure (a).

### (b) Etape de traitement différentiel :

Après enregistrement des signaux bruts Sⱼ(i,t), on procède à une étape de traitement différentiel, qui peut débuter après enregistrement complet de tous les signaux bruts ou simplement après enregistrement des premiers signaux bruts, en se déroulant alors partiellement pendant que les autres signaux bruts s'enregistrent.

Au cours de cette étape de traitement différentiel, le dispositif de commande et traitement 4 compare les signaux bruts Sⱼ(i,t) correspondant à des étapes de mesure successives d'indice j, pour en extraire des signaux différentiels Vⱼ(i,t) représentatifs de variations entre signaux bruts des étapes de mesure successives. Ces signaux, correspondant à des événements ponctuels isolés, sont généralement de type impulsionnel sur chaque canal de réception, c'est-à-dire sur chaque transducteur.

Cette étape de traitement différentiel peut elle-même comporter plusieurs sous-étapes, qui s'enchaînent par exemple comme suit :

### (b1) sous-étape de calcul de signaux différentiels bruts

Au cours de cette sous-étape, le dispositif de commande et traitement 4 calcule des signaux différentiels bruts Vbⱼ (i,t).

Ces signaux différentiels bruts Vbⱼ (i,t) peuvent être obtenus par exemple de deux façons à partir des signaux bruts Sⱼ (i,t) :
- soit par calcul de différences : Vbⱼ (i,t) = Sⱼ (i,t) - Sⱼ₋₁ (i, t) , pour j=2 à N ;
- soit par un filtrage passe-haut des signaux bruts Sⱼ(i,t), le filtrage étant effectué sur j pour ne conserver que les changements rapides entre les signaux bruts obtenus aux différentes étapes de mesure j.

### (b2) filtrage temporel passe-bas sur t

Le dispositif de commande et traitement 4 peut ensuite éventuellement procéder à une sous-étape de filtrage temporel passe-bas sur t, des signaux différentiels bruts Vbⱼ(i,t).

### (b3) détermination d'enveloppe

Le dispositif de commande et traitement 4 peut ensuite procéder à une sous-étape de détermination d'enveloppe au cours de laquelle on détermine les signaux différentiels Vⱼ(i,t) en :
- calculant une enveloppe temporelle Veⱼ(i,t) des signaux différentiels bruts Vbⱼ(i,t) filtrés issus de la sous-étape (b2),
- puis en procédant à un filtrage passe-bas sur i des enveloppes temporelles Veⱼ(i,t), pour obtenir les signaux différentiels Vⱼ(i,t).

### (c) Etape d'ajustement

Le dispositif de commande et traitement 4 procède ensuite à une étape d'ajustement au cours de laquelle on détermine au moins une fonction y = Pⱼ(x) correspondant à chaque signal différentiel Vⱼ(i,t).

Pour cela, le dispositif de commande et traitement 4 détermine d'abord des maxima Vⱼ(i, tᵢ) de Vⱼ(i,t) pour chaque transducteur i, et pour chaque étape de mesure j>1.

Puis le dispositif de commande et traitement 4 en déduit des points correspondants Dⱼ(xᵢ,yᵢ) du champ d'observation 8, où :
- xᵢ est une variable d'espace désignant une position de chaque transducteur i perpendiculairement à la direction de propagation (c'est-à-dire une variable unidimensionnelle consistant simplement en une coordonnée x le long de l'axe X dans le cas considéré ici, ou le cas échéant une variable bidimensionnelles comprenant deux coordonnées selon deux axes dans le cas d'un réseau 3 à deux dimensions),
- et yᵢ est une coordonnée désignant la position d'un point le long de la direction de propagation correspondant à au temps de trajet tᵢ pour lequel Vⱼ(i,t) est maximum (yᵢ = c.tᵢ/2, où c est la célérité de l'onde ultrasonore).

On notera que, plus généralement, ces points Dⱼ(xᵢ,yᵢ), pourraient être déterminés avec des valeurs yᵢ désignant la position d'un point le long de la direction de propagation correspondant à un temps de trajet tᵢ caractéristique du signal Vⱼ(i,t) : ce temps peut pas exemple correspondre au maximum du signal Vⱼ(i,t) comme décrit ci-dessus, ou correspondre au front d'onde du signal Vⱼ(i,t), ou autre.

Ensuite, le dispositif de commande et traitement 4 détermine pour chaque étape de mesure j>1, une fonction y = Pⱼ(x) qui est ajustée pour minimiser les écarts avec les points Dⱼ(xᵢ,yᵢ) (par exemple, on minimise l'écart quadratique Σ(Pj(xᵢ)-yᵢ)²) . La fonction y = Pⱼ (x) est une fonction continue sur x, de préférence une fonction polynomiale du second degré (parabolique). Cette fonction correspond à une parabole pour un réseau 3 linéaire tel que décrit ici, ou un paraboloïde pour un réseau 3 bidimensionnel.

### (d) Etape de localisation

Enfin, le dispositif de commande et traitement 4 procède à une étape de localisation de la cible différentielle de chaque étape de mesure j>1, c'est-à-dire pour simplifier, une localisation de la microbulle ayant disparu entre les étapes de mesure j-1 et j. A cet effet, le dispositif de commande et traitement 4 détermine le sommet Aⱼ (x₀, y₀) de la fonction Pⱼ susmentionnée, et ce sommet correspond à la position de la cible différentielle, déterminée avec une résolution nettement inférieure à la longueur d'ondes des ondes ultrasonores utilisées, par exemple de l'ordre de λ/50 à λ/200.

Les positions Aⱼ (x₀, y₀) des cibles différentielles successives peuvent ensuite être avantageusement reportées sur l'image du champ d'observation 8, obtenue par exemple par échographie comme indiqué ci-dessus (ou sur toute autre image du champ d'observation, obtenue par exemple par radiographie, IRM ou autre), de façon à obtenir une image de très haute résolution du champ d'observation 8.

Les étapes (c) et (d) susmentionnées peuvent être réalisées une fois tous les signaux différentiels déterminés, ou au fur et à mesure du calcul de ces signaux différentiels Vⱼ (i, t) .

On notera par ailleurs que les cibles différentielles susmentionnées peuvent correspondre à la création de microbulles ou d'autres diffuseurs, par exemple des bulles de cavitation obtenues entre les étapes de mesure par focalisation d'ultrasons ou par effet photoacoustique, en utilisant notamment le réseau 3 de transducteurs.

## Revendications

1. Procédé d'imagerie ultrasonore pour imager un champ d'observation (8) dans un milieu à imager (2) contenant des diffuseurs (7), ledit procédé comprenant plusieurs étapes de mesure successives au cours de chacune desquelles :
- on fait émettre par un réseau (3) de transducteurs (T₁-Tₙ) une onde ultrasonore incidente dans le champ d'observation (8), de longueur d'onde centrale λ,
- puis on enregistre des signaux bruts Sⱼ(i,t) captés par chaque transducteur (T₁-Tₙ) et représentatifs d'une onde ultrasonore réfléchie réverbérée par les diffuseurs (7) du milieu à partir de l'onde incidente, i étant un indice désignant chaque transducteur, j étant un indice désignant chaque étape de mesure et t désignant le temps,
le réseau (3) de transducteurs s'étendant selon au moins une dimension et les ondes incidentes se propageant principalement selon une direction de propagation perpendiculaire au réseau de transducteurs,
**caractérisé en ce qu'**on génère un nombre maximum C de cibles différentielles, différentes d'une étape de mesure à l'autre, chaque cible différentielle étant un diffuseur (7) qui est présent dans le champ d'observation lors d'une étape de mesure et absent lors d'une étape de mesure immédiatement adjacente,
le nombre C étant au plus égal à INT(A/(5λ)²)+1, où A est une aire du champ d'observation,
et **en ce que** ledit procédé comporte en outre les étapes suivantes :
- une étape de traitement différentiel au cours de laquelle on compare les signaux bruts Sⱼ(i,t) correspondant à des étapes de mesure successives d'indice j, pour en extraire des signaux différentiels Vⱼ(i,t) représentatifs de variations entre signaux bruts des étapes de mesure successives,
- une étape d'ajustement au cours de laquelle on détermine au moins une fonction y = Pⱼ(x) correspondant à chaque signal différentiel Vⱼ(i,t), où x est une variable d'espace désignant une position perpendiculairement à la direction de propagation et y est une coordonnée désignant la position d'un point le long de la direction de propagation correspondant à un temps de trajet t,
- et une étape de localisation au cours de laquelle on détermine un sommet Aⱼ(x₀,y₀) de ladite fonction Pⱼ, correspondant à la position de la cible différentielle.

2. Procédé selon la revendication 1, dans lequel le nombre C est au plus égal à 2, de préférence égal à 1.

3. Procédé selon la revendication 1 ou la revendication 2, dans lequel, au cours de l'étape d'ajustement, on détermine la fonction y = Pⱼ(x) en ajustant ladite fonction pour minimiser des écarts avec des points Dⱼ(xᵢ,yᵢ), où xᵢ est une variable d'espace désignant une position de chaque transducteur i perpendiculairement à la direction de propagation et yᵢ est une coordonnée désignant la position d'un point le long de la direction de propagation correspondant à un temps de trajet tᵢ caractéristique du signal Vⱼ(i,t).

4. Procédé selon l'une quelconque des revendications précédentes, dans lequel ladite fonction P est parabolique.

5. Procédé selon l'une quelconque des revendications précédentes, dans lequel l'étape de traitement différentiel comporte une sous-étape de calcul de signaux différentiels bruts au cours de laquelle on détermine des signaux différentiels bruts Vbⱼ(i,t) = Sⱼ(i,t) - Sⱼ₋₁(i,t) .

6. Procédé selon l'une quelconque des revendications 1 à 4, dans lequel l'étape de traitement différentiel comporte une sous-étape de calcul de signaux différentiels bruts au cours de laquelle on détermine des signaux différentiels bruts Vbⱼ(i,t) au moins par un filtrage passe-haut des signaux bruts Sⱼ(i,t) sur j.

7. Procédé selon l'une quelconque des revendications 5 et 6, dans lequel l'étape de traitement différentiel comporte en outre une sous-étape de détermination d'enveloppe au cours de laquelle on détermine les signaux différentiels Vⱼ(i,t) en calculant une enveloppe temporelle de chaque signal différentiel brut Vbⱼ(i,t).

8. Procédé selon la revendication 7, dans lequel la sous-étape de détermination d'enveloppe comporte un calcul d'une enveloppe temporelle Veⱼ(i,t) puis un filtrage passe-bas des enveloppes temporelles Veⱼ(i,t) sur i, pour obtenir les signaux différentiels Vⱼ(i,t) .

9. Procédé selon l'une quelconque des revendications précédentes, dans lequel le champ d'observation (8) comporte des microbulles (7) et on détecte les microbulles ayant disparu du champ d'observation d'une étape de mesure à l'autre, ces microbulles disparues constituant lesdites cibles différentielles.

10. Procédé selon la revendication 9, dans lequel l'onde incidente présente une amplitude adaptée pour détruire le nombre maximum C de microbulles (7) à chaque étape de mesure.

11. Procédé selon la revendication 9, dans lequel l'onde incidente émise à chaque étape de mesure présente une amplitude adaptée pour ne pas détruire de microbulles (7) et le procédé comporte en outre, en alternance avec les étapes de mesure, des étapes de destruction au cours desquelles on émet une onde ultrasonore destructive ayant une amplitude adaptée pour détruire le nombre maximum C de microbulles (7) à chaque étape de destruction.

12. Procédé selon l'une quelconque des revendications précédentes, dans lequel les positions Aⱼ(x₀,y₀) des cibles différentielles successives sont reportées sur une image du champ d'observation (8).

13. Procédé selon la revendication 12, dans lequel ladite image du champ d'observation (8) est obtenue par échographie à partir dudit réseau (3) de transducteurs.

14. Dispositif pour la mise en oeuvre d'un procédé selon l'une quelconque des revendications précédentes, ce dispositif comportant un réseau (3) de transducteurs (T₁-Tₙ) commandé par un dispositif de commande et traitement (4) adapté pour imager un champ d'observation (8) dans un milieu à imager (2) contenant des diffuseurs (7),
le dispositif de commande et traitement (4) étant adapté pour, au cours de plusieurs étapes successives de mesure :
- faire émettre par le réseau de transducteurs (3) une onde ultrasonore incidente dans le champ d'observation (8) à chaque étape de mesure,
- puis enregistrer des signaux bruts Sⱼ(i,t) captés par chaque transducteur (T₁-Tₙ) et représentatifs d'une onde ultrasonore réfléchie réverbérée par les diffuseurs (7) du milieu à partir de l'onde incidente, i étant un indice désignant chaque capteur, j étant un indice désignant chaque étape de mesure et t désignant le temps, le réseau (3) de transducteurs s'étendant selon au moins une dimension et les ondes incidentes se propageant principalement selon une direction de propagation perpendiculaire au réseau de transducteurs,
**caractérisé en ce que** le dispositif de commande et traitement (4) est adapté pour générer un nombre maximum C de cibles différentielles, différentes d'une étape de mesure à l'autre, chaque cible différentielle étant un diffuseur (7) qui est présent dans le champ d'observation lors d'une étape de mesure et absent lors d'une étape de mesure immédiatement adjacente,
le nombre C étant au plus égal à INT(A/(5λ)²)+1, où A est une aire du champ d'observation,
et **en ce que** le dispositif de commande et traitement (4) est en outre adapté pour réaliser en outre les étapes suivantes :
- une étape de traitement différentiel au cours de laquelle on compare les signaux bruts Sⱼ(i,t) correspondant à des étapes de mesure successives d'indice j pour en extraire des signaux différentiels Vⱼ(i,t) représentatifs de variations entre signaux bruts des étapes de mesure successives,
- une étape d'ajustement au cours de laquelle on détermine au moins une fonction y = Pⱼ(x) correspondant à chaque signal différentiel Vⱼ(i,t), où x est une variable d'espace désignant une position perpendiculairement à la direction de propagation et y est une coordonnée désignant la position d'un point le long de la direction de propagation correspondant à un temps de trajet t,
- et une étape de localisation au cours de laquelle on détermine un sommet Aⱼ(x₀,y₀) de ladite fonction Pⱼ, correspondant à la position de la cible différentielle.

## Patentansprüche

1. Verfahren zur Ultraschallbildgebung, um ein Beobachtungsfeld (8) in einem Abbildungsmedium (2) abzubilden, umfassend Diffusoren (7), wobei das Verfahren mehrere aufeinanderfolgende Messschritte umfasst, während derer jeweils:
- von einem Netz (3) von Transduktoren (T₁-Tₙ) eine in dem Beobachtungsfeld (8) eintreffende Ultraschallwelle mit einer zentralen Wellenlänge λ entsandt wird,
- dann Bruttosignale Sⱼ(i,t), die von jedem Transduktor (T₁-Tₙ) erfasst werden und für eine reflektierte Ultraschallwelle repräsentativ sind, die von den Diffusoren (7) des Mediums von der eintreffenden Welle zurückgeworfen wird, wobei i ein Index ist, der jeden Transduktor bezeichnet, j ein Index ist, der jeden Messschritt bezeichnet, und t die Zeit angibt,
wobei sich das Netz (3) von Transduktoren entlang mindestens einer Dimension erstreckt und sich die eintreffenden Wellen hauptsächlich in eine Ausbreitungsrichtung senkrecht auf das Netz von Transduktoren ausbreiten,
**dadurch gekennzeichnet, dass** eine maximale Anzahl C von Differentialzielen, die von einem Messschritt zum anderen unterschiedlich sind, erzeugt wird, wobei jedes Differentialziel ein Diffusor (7) ist, der in dem Beobachtungsfeld bei einem Messschritt vorhanden ist und in einem unmittelbar angrenzenden Messschritt fehlt,
wobei die Anzahl C höchstens gleich INT(A/(5λ)²)+1 ist, wobei A ein Bereich des Beobachtungsfeldes ist,
und dass das Verfahren ferner die folgenden Schritte umfasst:
- einen Schritt der Differentialbearbeitung, während dessen die Bruttosignale Sⱼ(i,t), die aufeinanderfolgenden Messschritten mit dem Index j entsprechen, verglichen werden, um daraus Differentialsignale Vⱼ(i,t) zu extrahieren, die für Variationen zwischen Bruttosignalen der aufeinanderfolgenden Messschritte repräsentativ sind,
- einen Anpassungsschritt, während dessen mindestens eine Funktion y = Pⱼ(x) bestimmt wird, die jedem Differentialsignal Vⱼ(i,t) entspricht, wobei x eine Raumvariable ist, die eine Position senkrecht auf die Ausbreitungsrichtung bezeichnet, und y eine Koordinate ist, die die Position eines Punktes entlang der Ausbreitungsrichtung entsprechend einer Streckenzeit t bezeichnet,
- und einen Lokalisierungsschritt, während dessen eine Spitze Aⱼ(x₀,y₀) der Funktion Pⱼ bestimmt wird, entsprechend der Position des Differentialziels.

2. Verfahren nach Anspruch 1, bei dem die Anzahl C höchstens gleich 2, vorzugsweise gleich 1 ist.

3. Verfahren nach Anspruch 1 oder Anspruch 2, bei dem während des Anpassungsschrittes die Funktion y = Pⱼ(x) bestimmt wird, wobei die Funktion angepasst wird, um Abstände mit Punkten Dⱼ(xᵢ,yᵢ) zu minimieren, wobei xᵢ eine Raumvariable ist, die eine Position jedes Transduktors i senkrecht auf die Ausbreitungsrichtung bezeichnet, und yᵢ eine Koordinate ist, die die Position eines Punktes entlang der Ausbreitungsrichtung entsprechend einer Streckenzeit tᵢ, die für das Signal Vⱼ(i,t) charakteristisch ist, bezeichnet.

4. Verfahren nach einem der vorhergehenden Ansprüche, bei dem die Funktion P parabolisch ist.

5. Verfahren nach einem der vorhergehenden Ansprüche, bei dem der Schritt der Differentialbearbeitung einen Unterschritt der Berechnung von Bruttodifferentialsignalen umfasst, während dessen Bruttodifferentialsignale Vbⱼ(i,t) = Sⱼ(i,t) - Sⱼ₋₁ (i,t) bestimmt werden.

6. Verfahren nach einem der Ansprüche 1 bis 4, bei dem der Differentialbearbeitungsschritt einen Unterschritt der Berechnung von Bruttodifferentialsignalen umfasst, während dessen Bruttodifferentialsignale Vbⱼ(i,t) zumindest durch eine Hochpassfilterung der Bruttosignale Sⱼ(i,t) auf j bestimmt werden.

7. Verfahren nach einem der Ansprüche 5 und 6, bei dem der Differentialbearbeitungsschritt ferner einen Unterschritt der Bestimmung einer Umhüllenden umfasst, während dessen die Differentialsignale Vⱼ(i,t) durch Berechnung einer Zeitumhüllenden jedes Bruttodifferentialsignals Vbⱼ(i,t) bestimmt werden.

8. Verfahren nach Anspruch 7, bei dem der Unterschritt der Bestimmung einer Umhüllenden eine Berechnung einer Zeitumhüllenden Veⱼ(i,t), dann eine Tiefpassfilterung der Zeitumhüllenden Veⱼ(i,t) auf i umfasst, um die Differentialsignale Vⱼ(i,t) zu erhalten.

9. Verfahren nach einem der vorhergehenden Ansprüche, bei dem das Beobachtungsfeld (8) Mikroblasen (7) umfasst und die Mikroblasen, die von dem Beobachtungsfeld von einem Messschritt zum anderen verschwunden sind, erfasst werden, wobei diese verschwundenen Mikroblasen die Differentialziele darstellen.

10. Verfahren nach Anspruch 9, bei dem die eintreffende Welle eine Amplitude aufweist, die dazu angepasst ist, die maximale Anzahl C von Mikroblasen (7) in jedem Messschritt zu zerstören.

11. Verfahren nach Anspruch 9, bei dem die in jedem Messschritt entsandte Welle eine Amplitude aufweist, die dazu angepasst ist, keine Mikroblasen (7) zu zerstören, und wobei das Verfahren ferner alternierend mit den Messschritten Zerstörungsschritte umfasst, während derer eine zerstörerische Ultraschallwelle mit einer Amplitude entsandt wird, die dazu angepasst ist, die maximale Anzahl C von Mikroblasen (7) in jedem Zerstörungsschritt zu zerstören.

12. Verfahren nach einem der vorhergehenden Ansprüche, bei dem die Positionen Aⱼ(x₀,y₀) der aufeinanderfolgenden Differentialziele auf einem Bild des Beobachtungsfeldes (8) eingetragen werden.

13. Verfahren nach Anspruch 12, bei dem das Bild des Beobachtungsfeldes (8) durch Echographie auf Basis des Netzes (3) von Transduktoren erhalten wird.

14. Vorrichtung für den Einsatz eines Verfahrens nach einem der vorhergehenden Ansprüche, wobei diese Vorrichtung ein Netz (3) von Transduktoren (T₁-Tₙ) umfasst, das von einer Steuer- und Bearbeitungseinrichtung (4) gesteuert wird, die dazu geeignet ist, ein Beobachtungsfeld (8) in einem Abbildungsmedium (2), das Diffusoren (7) enthält, abzubilden,
wobei die Steuer- und Bearbeitungseinrichtung (4) dazu vorgesehen ist, während mehrerer aufeinanderfolgender Messschritte:
- von dem Netz von Transduktoren (3) eine in dem Beobachtungsfeld (8) eintreffende Ultraschallwelle bei jedem Messschritt zu entsenden,
- dann Bruttosignale Sⱼ(i,t) aufzuzeichnen, die von jedem Transduktor (T₁-Tₙ) erfasst werden und für eine reflektierte Ultraschallwelle, die von den Diffusoren (7) des Mediums ausgehend von der eintreffenden Welle zurückgeworfen wird, repräsentativ sind, wobei i ein Index ist, der jeden Sensor bezeichnet, j ein Index ist, der jeden Messschritt bezeichnet, und t die Zeit angibt,
wobei sich das Netz (3) von Transduktoren entlang mindestens einer Dimension erstreckt und sich die eintreffenden Wellen hauptsächlich in eine Ausbreitungsrichtung senkrecht auf das Netz von Transduktoren ausbreiten,
**dadurch gekennzeichnet, dass** die Steuer- und Bearbeitungseinrichtung (4) dazu vorgesehen ist, eine maximale Anzahl C von Differentialzielen, die von einem Messschritt zum anderen unterschiedlich sind, erzeugt wird, wobei jedes Differentialziel ein Diffusor (7) ist, der in dem Beobachtungsfeld bei einem Messschritt vorhanden ist und in einem unmittelbar angrenzenden Messschritt fehlt,
wobei die Anzahl C höchstens gleich INT(A/(5λ)²)+1 ist, wobei A ein Bereich des Beobachtungsfeldes ist,
und dass die Steuer- und Bearbeitungseinrichtung (4) ferner dazu vorgesehen ist, die folgenden Schritte durchzuführen:
- einen Schritt der Differentialbearbeitung, während dessen die Bruttosignale Sⱼ(i,t), die aufeinanderfolgenden Messschritten mit dem Index j entsprechen, verglichen werden, um daraus Differentialsignale Vⱼ(i,t) zu extrahieren, die für Variationen zwischen Bruttosignalen der aufeinanderfolgenden Messschritte repräsentativ sind,
- einen Anpassungsschritt, während dessen mindestens eine Funktion y = Pⱼ(x) bestimmt wird, die jedem Differentialsignal Vⱼ(i,t) entspricht, wobei x eine Raumvariable ist, die eine Position senkrecht auf die Ausbreitungsrichtung bezeichnet, und y eine Koordinate ist, die die Position eines Punktes entlang der Ausbreitungsrichtung entsprechend einer Streckenzeit t bezeichnet,
- und einen Lokalisierungsschritt, während dessen eine Spitze Aⱼ(x₀,y₀) der Funktion Pⱼ bestimmt wird, entsprechend der Position des Differentialziels.

## Claims

1. Ultrasound imaging method for imaging a field of observation (8) in an environment to be imaged (2) containing scatterers (7), said method comprising several successive measurement steps during each of which:
- an array (3) of transducers (T₁-Tₙ) emits an incident ultrasound wave into the field of observation (8), of center wavelength λ,
- then raw signals Sⱼ(i,t) picked up by each transducer (T₁-Tₙ) and representative of a reflected ultrasound wave reverberated from the incident wave by the scatterers (7) in the environment are recorded, i being an index denoting each transducer, j being an index denoting each measurement step, and t denoting the time,
the array (3) of transducers extending along at least one dimension and the incident waves mainly being propagated in a direction of propagation perpendicular to the array of transducers,
**characterized in that** a maximum number C of differential targets is generated, differing from one measurement step to another, each differential target being a scatterer (7) which is present in the field of observation during a measurement step and absent during an immediately adjacent measurement step,
the number C being at most equal to INT(A/(5λ)²)+1, where A is an area of the field of observation,
**and in that** said method further comprises the following steps:
- a differential processing step during which the raw signals Sⱼ(i,t) corresponding to successive measurement steps of index j are compared in order to extract differential signals Vⱼ(i,t) representative of variations between raw signals from the successive measurement steps,
- an adjustment step during which at least one function y = Pⱼ(x) corresponding to each differential signal Vⱼ(i,t) is determined, where x is a space variable denoting a position perpendicular to the direction of propagation and y is a coordinate denoting the position of a point along the direction of propagation corresponding to a travel time t,
- and a positioning step during which a crest Aⱼ (x₀,y₀) of said function Pⱼ is determined, corresponding to the position of the differential target.

2. The method according to claim 1, wherein the number C is at most equal to 2, preferably being equal to 1.

3. The method according to claim 1 or claim 2, wherein, during the adjustment step, the function y = Pⱼ(x) is determined by adjusting said function to minimize deviations with points Dⱼ(xᵢ,yᵢ), where xᵢ is a space variable denoting a position of each transducer i perpendicularly to the direction of propagation and yᵢ is a coordinate denoting the position of a point along the direction of propagation corresponding to a travel time tᵢ characteristic of the signal Vⱼ(i,t).

4. The method according to any one of the preceding claims, wherein said function P is parabolic.

5. The method according to any one of the preceding claims, wherein the differential processing step comprises a sub-step of calculating raw differential signals, during which raw differential signals Vbⱼ(i,t) = Sⱼ(i,t) - Sⱼ₋₁(i,t) are determined.

6. The method according to any one of claims 1-4, wherein the differential processing step comprises a sub-step of calculating raw differential signals, during which raw differential signals Vbⱼ (i,t) are determined at least by a high-pass filtering of raw signals Sⱼ (i,t) on j.

7. The method according to any one of claims 5-6, wherein the differential processing step further comprises a sub-step of determining an envelope, during which the differential signals Vⱼ (i,t) are determined by calculating a temporal envelope of each raw differential signal Vbⱼ (i,t).

8. The method according to claim 7, wherein the sub-step of determining an envelope comprises a calculation of a temporal envelope Veⱼ (i,t) then a low-pass filtering of the temporal envelopes Veⱼ (i,t) on i in order to obtain the differential signals Vⱼ (i,t).

9. The method according to any one of the preceding claims, wherein the field of observation (8) comprises micro bubbles (7) and the micro bubbles which have disappeared from the field of observation from one measurement step to another are detected, these micro bubbles that have disappeared constituting said differential targets.

10. The method according to claim 9, wherein the incident wave has an amplitude suitable for destroying the maximum number C of micro bubbles (7) in each measurement step.

11. The method according to claim 9, wherein the incident wave emitted in each measurement step has an amplitude suitable for not destroying micro bubbles (7), and the method further comprises, alternating with the measurement steps, destruction steps during which a destructive ultrasound wave is emitted that has an amplitude suitable for destroying the maximum number C of micro bubbles (7) in each destruction step.

12. The method according to any one of the preceding claims, wherein the positions Aⱼ (x₀,y₀) of the successive differential targets are plotted on an image of the field of observation (8).

13. The method according to claim 12, wherein said image of the field of observation (8) is obtained by ultrasonography using said array (3) of transducers.

14. A device for carrying out a method according to any one of the preceding claims, this device comprising an array (3) of transducers (T₁-Tₙ) controlled by a control and processing device (4) adapted for imaging a field of observation (8) in an environment to be imaged (2) containing scatterers (7),
the control and processing device (4) being adapted for, during a plurality of successive measurement steps:
- causing the array of transducers (3) to emit an incident ultrasound wave into the field of observation (8) in each measurement step,
- then recording raw signals Sⱼ (i,t) picked up by each transducer (T₁-Tₙ) and representative of a reflected ultrasound wave reverberated from the incident wave by the scatterers (7) of the environment, i being an index denoting each sensor, j being an index denoting each measurement step, and t denoting the time,
the array (3) of transducers extending along at least one dimension and the incident waves mainly propagating in a direction of propagation perpendicular to the array of transducers,
**characterized in that** the control and processing device (4) is adapted to generate a maximum number C of differential targets, differing from one measurement step to another, each differential target being a scatterer (7) which is present in the field of observation during a measurement step and absent during an immediately adjacent measurement step,
the number C being at most equal to INT(A/(5A)²)+1, where A is an area of the field of observation,
**and in that** the control and processing device (4) is further adapted to further carry out the following steps:
- a differential processing step during which the raw signals Sⱼ(i,t) corresponding to successive measurement steps of index j are compared in order to extract differential signals Vⱼ(i,t) representative of variations between raw signals from successive measurement steps,
- an adjustment step during which at least one function y = Pⱼ(x) corresponding to each differential signal Vⱼ(i,t) is determined, where x is a space variable denoting a position perpendicular to the direction of propagation and y is a coordinate denoting the position of a point along the direction of propagation corresponding to a travel time t,
- and a positioning step during which a crest Aⱼ (x₀,y₀) of said function Pⱼ is determined, corresponding to the position of the differential target.
